(19) **Europäisches Patentamt / European Patent Office / Office européen des brevets**

(11) **EP 4 308 803 B1**

(12) **FASCICULE DE BREVET EUROPEEN**

(45) Date de publication et mention de la délivrance du brevet:
**12.03.2025 Bulletin 2025/11**

(21) Numéro de dépôt: **22714497.9**

(22) Date de dépôt: **18.03.2022**

(51) Classification Internationale des Brevets (IPC):
**F01M 11/12** (2006.01)   **F01D 25/20** (2006.01)
**F16N 29/04** (2006.01)

(52) Classification Coopérative des Brevets (CPC):
**F01M 11/12; F01D 25/20;** F16N 29/04;
F16N 2210/02; F16N 2250/08; F16N 2250/18;
F16N 2260/04

(86) Numéro de dépôt international:
**PCT/FR2022/050499**

(87) Numéro de publication internationale:
**WO 2022/195234 (22.09.2022 Gazette 2022/38)**

(54) **SURVEILLANCE D'UNE VANNE ANTI FUITE DANS UN TURBOREACTEUR**

ÜBERWACHUNG EINES LECKAGEFREIEN VENTILS IN EINEM STRAHLTRIEBWERK

MONITORING AN ANTI-LEAK VALVE IN A JET ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2021 FR 2102799**

(43) Date de publication de la demande:
**24.01.2024 Bulletin 2024/04**

(73) Titulaire: **SAFRAN AIRCRAFT ENGINES**
**75015 Paris (FR)**

(72) Inventeurs:
• **DENEUVE, Sébastien Jean Fernand**
**77550 MOISSY-CRAMAYEL (FR)**
• **VERRIER, Alrick Patrick Michel Jacques**
**77550 MOISSY-CRAMAYEL (FR)**
• **RICADAT-CROSNIER, Matthieu Louis Joseph**
**77550 MOISSY-CRAMAYEL (FR)**
• **MORISOT, Clémentine**
**77550 MOISSY-CRAMAYEL (FR)**

(74) Mandataire: **Brevalex**
**Tour Trinity**
**1 B Place de la Défense**
**92400 Courbevoie (FR)**

(56) Documents cités:
EP-A1- 2 458 161   EP-A1- 2 829 698
FR-A1- 2 958 911   US-A1- 2019 226 358

## Description

### Domaine technique

La présente invention concerne de manière générale le système de lubrification d'un turboréacteur. Elle concerne plus particulièrement la surveillance d'une vanne anti fuite d'un circuit d'alimentation en huile entre un réservoir d'huile et des éléments à lubrifier d'un turboréacteur.

### État de l'art antérieur

Un turboréacteur comporte un système de lubrification, directement monté sur la boîte d'accessoires (dite aussi AGB d'après l'anglais « accessory gearbox ») du turboréacteur. Le système de lubrification comporte un réservoir d'huile, un circuit d'alimentation en huile pour distribuer l'huile aux organes du turboréacteur à lubrifier et un circuit de récupération d'huile pour assurer le retour d'huile vers le réservoir. Un ensemble de pompes, actionneurs et capteurs permettent la circulation d'huile depuis le réservoir vers les organes du turboréacteur à lubrifier via le circuit d'alimentation et inversement depuis le turboréacteur vers le réservoir via le circuit de récupération.

Les deux fonctions principales du système de lubrification sont d'une part de lubrifier et refroidir les organes du turboréacteur et d'autre part de maintenir la température de l'huile à un niveau acceptable. La surveillance globale du système de lubrification est effectuée par un logiciel de régulation qui acquiert des données depuis un capteur de pression et température d'huile placé au niveau de la boite d'accessoires et un capteur de niveau d'huile placé dans le réservoir d'huile.

Le circuit d'alimentation en huile entre le réservoir d'huile et les organes du turboréacteur à lubrifier comporte une vanne anti fuite, dite ALV d'après l'anglais « Anti Leak Valve ». La vanne anti fuite est de type tout ou rien : elle s'ouvre en fonction des conditions de fonctionnement et elle n'est pas pilotée par le calculateur du turboréacteur. La vanne anti fuite a pour fonction d'empêcher que l'huile présente dans le réservoir ne se vide par gravité dans la boite d'accessoires du turboréacteur, à l'arrêt du turboréacteur.

En cas de dysfonctionnement de la vanne anti fuite, elle ne remplit plus sa fonction, ce qui peut avoir un impact négatif sur le turboréacteur.

En effet, les différentes pompes des circuits d'alimentation et de récupération du système de lubrification ne fonctionnent pas lorsque le turboréacteur est arrêté et sans la vanne anti fuite, l'huile se vidange du réservoir d'huile vers la boite d'accessoires du turboréacteur. Cela pose des problèmes, notamment un risque que le réservoir vide ne soit rempli d'huile au cours d'une opération de maintenance, ce qui aurait pour conséquence de conduire à un trop plein d'huile dans le turboréacteur. Or, un trop plein d'huile produit des effets néfastes pour le turboréacteur.

Il y a donc un besoin de surveillance de la vanne anti fuite du circuit d'alimentation en huile entre le réservoir d'huile et les éléments à lubrifier du turboréacteur, pour pouvoir détecter une défaillance de la vanne anti fuite. FR2958911 A1 décrit un exemple de surveillance du niveau de l'huile contenue dans le réservoir d'un turboréacteur.

### Exposé de l'invention

L'invention vise à résoudre les problèmes de la technique antérieure en fournissant un procédé de surveillance d'une vanne anti fuite d'un circuit d'alimentation en huile entre un réservoir d'huile et des éléments à lubrifier d'un turboréacteur, caractérisé en ce qu'il comporte des étapes de :

- Commande de mesure de valeurs de niveau d'huile dans le réservoir, respectivement au début et à la fin du démarrage du turboréacteur,
- Calcul de la différence entre les valeurs de niveau d'huile dans le réservoir au début et à la fin du démarrage du turboréacteur, pour former une évolution mesurée du niveau d'huile dans le réservoir,
- Commande de mesure d'une valeur de température d'huile,
- Détermination d'une évolution estimée du niveau d'huile dans le réservoir, en fonction de la valeur de température d'huile,
- Calcul de la différence entre l'évolution mesurée du niveau d'huile dans le réservoir et l'évolution estimée du niveau d'huile dans le réservoir pour la valeur de température mesurée,
- Comparaison de la différence calculée avec un seuil de détection,
- Activation d'une alarme si la différence calculée est inférieure au seuil de détection.

Grâce à l'invention, il est possible de surveiller la vanne anti fuite du circuit d'alimentation en huile entre le réservoir d'huile et les éléments à lubrifier du turboréacteur sans installer un capteur de position sur la vanne anti fuite. Un tel capteur aurait un impact sur la masse, le coût et la complexité du produit.

L'invention évite également des opérations de maintenance préventive pour s'assurer du bon fonctionnement de de la vanne anti fuite, qui augmenteraient fortement les contraintes de maintenance et qui ne font pas partie d'une solution opérationnellement envisageable.

Selon une caractéristique préférée, le début et la fin du démarrage du turboréacteur sont détectés sur la base d'une mesure de vitesse d'un arbre haute pression du turboréacteur. Selon une caractéristique préférée, l'alarme est activée si le résultat de la comparaison est inférieur au seuil de détection pour un premier nombre prédéterminé de démarrage du turboréacteur parmi un second nombre prédéterminé des derniers démarrages du turboréacteur.

L'invention concerne aussi un dispositif de surveillance d'une vanne anti fuite d'un circuit d'alimentation en huile entre un réservoir d'huile et des éléments à lubrifier d'un turboréacteur, caractérisé en ce qu'il comporte :

- Un capteur apte à mesurer des valeurs de niveau d'huile dans le réservoir, respectivement au début et à la fin du démarrage du turboréacteur,
- Un capteur apte à mesurer une valeur de température d'huile,
- Un calculateur apte à calculer la différence entre les valeurs de niveau d'huile dans le réservoir au début et à la fin du démarrage du turboréacteur pour former une évolution mesurée du niveau d'huile dans le réservoir, déterminer une évolution estimée du niveau d'huile dans le réservoir en fonction de la valeur de température d'huile, calculer la différence entre l'évolution mesurée du niveau d'huile dans le réservoir et l'évolution estimée du niveau d'huile dans le réservoir pour la valeur de température mesurée, comparer la différence calculée avec un seuil de détection, et activer une alarme si la différence calculée est inférieure au seuil de détection.

L'invention concerne aussi un turboréacteur équipé d'un dispositif de surveillance d'une vanne anti fuite d'un circuit d'alimentation en huile entre un réservoir d'huile et des éléments à lubrifier du turboréacteur, tel que précédemment présenté.

L'invention concerne encore un aéronef équipé d'un turboréacteur tel que précédemment présenté.

Le dispositif, le turboréacteur et l'aéronef présentent des avantages analogues à ceux précédemment présentés.

Dans un mode particulier de réalisation, les étapes du procédé selon l'invention sont mises en œuvre par des instructions de programme d'ordinateur.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

L'invention vise aussi un support d'informations lisible par un ordinateur, et comportant des instructions de programme d'ordinateur adaptées à la mise en œuvre des étapes d'un procédé tel que décrit ci-dessus.

**Brève description des dessins**

D'autres caractéristiques et avantages apparaîtront à la lecture de la description suivante d'un mode de réalisation préféré donné à titre d'exemple non limitatif, décrit en référence aux figures dans lesquelles :

[Fig. 1] illustre un turboréacteur équipé d'un circuit de surveillance de la vanne anti fuite du circuit d'alimentation du système de lubrification, selon un mode de réalisation de l'invention,

[Fig. 2] illustre un procédé de surveillance de la vanne anti fuite du circuit d'alimentation du système de lubrification, selon un mode de réalisation de l'invention,

[Fig. 3] illustre l'évolution du niveau d'huile dans le réservoir au cours du démarrage du turboréacteur,

[Fig. 4] illustre le niveau d'huile dans le réservoir lors du démarrage du turboréacteur en fonction de la température d'huile,

[Fig. 5] illustre un indicateur formé selon l'invention, en fonction de la température d'huile,

[Fig. 6] illustre la distribution de l'indicateur représenté à la figure 5,

[Fig. 7] illustre des indicateurs déterminés pour des démarrages de turboréacteur et la distribution de ces indicateurs.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

**Exposé détaillé de modes de réalisation particuliers**

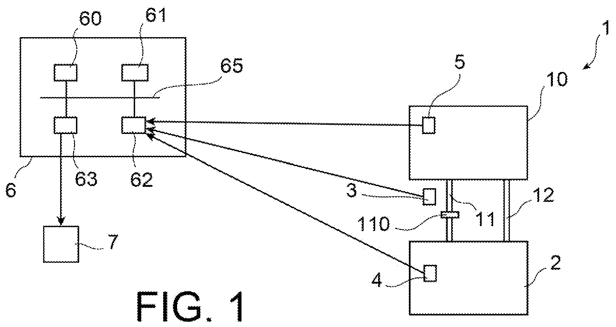

Selon un mode de réalisation préféré, représenté à la figure 1, un turboréacteur comporte un système de lubrification 1 d'un ensemble 2 d'organes du turboréacteur à lubrifier.

Le système de lubrification comporte un réservoir d'huile 10, un circuit 11 d'alimentation en huile pour distribuer l'huile aux organes du turboréacteur à lubrifier et un circuit 12 de récupération d'huile pour assurer le retour d'huile vers le réservoir. Le turboréacteur comporte également une boite d'accessoires non représentée.

On s'intéresse plus particulièrement à une vanne anti fuite 110, dite ALV d'après l'anglais « Anti Leak Valve », du circuit d'alimentation 11 en huile, disposée entre le réservoir 10 et l'ensemble 2 d'organes à lubrifier.

La vanne anti fuite est de type tout ou rien. La vanne anti fuite a pour fonction d'empêcher que l'huile présente dans le réservoir ne se vide par gravité dans la boite d'accessoires du turboréacteur, à l'arrêt du turboréacteur.

Le turboréacteur comporte des capteurs, notamment un capteur 3 de température d'huile placé dans la boite d'accessoires, un capteur 4 de vitesse d'arbre haute pression du turboréacteur et un capteur 5 de niveau d'huile placé dans le réservoir d'huile 10. Seuls les éléments utiles à la compréhension de l'invention sont décrits, et les autres éléments du turboréacteur et de son système de lubrification sont connus de l'homme du métier et ne seront pas détaillées ici.

Le turboréacteur comporte un circuit 6 de surveillance de la vanne anti fuite 110 du circuit d'alimentation en huile. Le circuit de surveillance de la vanne anti fuite peut être un calculateur dédié ou un sous-ensemble d'un calculateur qui réalise une surveillance globale du circuit d'huile via un logiciel de régulation qui reçoit des données depuis des capteurs.

Le circuit de surveillance 6 a la structure générale d'un ordinateur. Il comporte notamment un processeur 60 exécutant un programme d'ordinateur mettant en œuvre le procédé selon l'invention, une mémoire 61, une interface d'entrée 62 et une interface de sortie 63.

Ces différents éléments sont classiquement reliés par un bus 65.

L'interface d'entrée 62 est reliée à des sorties respectives des capteurs 3, 4 et 5 et est destinée à recevoir les grandeurs mesurées par ces capteurs.

Le processeur 60 exécute les traitements exposés dans la suite. Ces traitements sont réalisés sous la forme d'instructions de code du programme d'ordinateur qui sont mémorisées par la mémoire 61 avant d'être exécutées par le processeur 60.

La mémoire 61 mémorise les valeurs mesurées et les valeurs calculées.

L'interface de sortie 63 est reliée à un système d'alarme 7, intégré ou non au circuit de surveillance 6 et qui est activé en fonction du résultat de la surveillance. Le système d'alarme 7 est classique et comporte une interface à destination d'un opérateur pour lui délivrer une alarme.

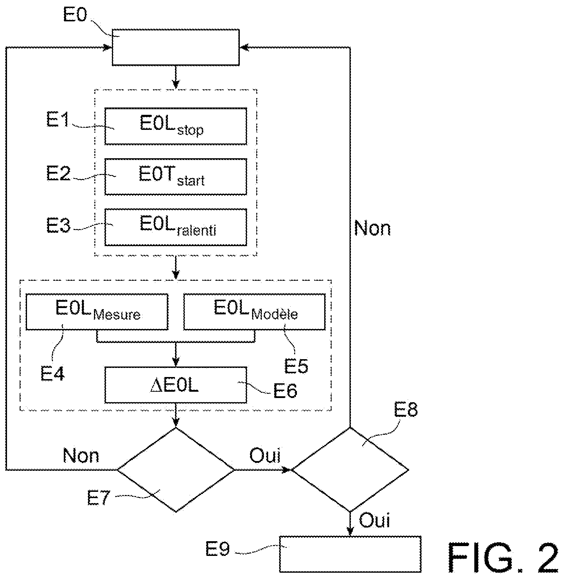

La figure 2 représente un mode de réalisation de procédé de surveillance de vanne anti fuite 110 du circuit 11 d'alimentation en huile du turboréacteur. Ce procédé comporte des étapes E0 à E9 mises en œuvre par le circuit de surveillance 6 lors du démarrage du turboréacteur.

L'étape E0 est une étape d'attente, dans laquelle le turboréacteur est à l'arrêt. Les étapes suivantes E1 à E9 sont parcourues lorsqu'un démarrage du turboréacteur est initié.

Lors d'un démarrage du turboréacteur en l'absence de fuite de la vanne anti fuite 110 du circuit d'alimentation 11 en huile, l'évolution de la quantité d'huile présente dans l'ensemble 2 d'organes du turboréacteur à lubrifier est un phénomène reproductible où seule la variabilité de température d'huile d'un vol à l'autre conduit à une légère dispersion.

En cas de fuite de la vanne anti fuite 110 du circuit d'alimentation 11 en huile, de l'huile s'écoule entre le réservoir et la boite d'accessoires lorsque le turboréacteur est à l'arrêt. Cela provoque une quantité d'huile anormalement élevée l'ensemble 2 d'organes du turboréacteur à lubrifier juste avant le démarrage et au début du démarrage. Dans ce cas, lors du démarrage du turboréacteur, l'évolution de la quantité d'huile présente dans l'ensemble 2 d'organes du turboréacteur à lubrifier sera donc différente de l'évolution habituellement rencontrée.

L'étape E1 est une commande de mesure du niveau d'huile $EOL_{stop}$ dans le réservoir 10 au début du démarrage du turboréacteur. Le niveau d'huile dans le réservoir 10 est mesuré par le capteur 5. La quantité globale d'huile dans le turboréacteur est sensiblement égale à la somme de la quantité d'huile présente dans le réservoir 10 et de la quantité d'huile présente dans l'ensemble 2 d'organes du turboréacteur à lubrifier. La mesure du niveau d'huile dans le réservoir 10 est donc un indicateur de la quantité d'huile présente dans l'ensemble 2 d'organes du turboréacteur à lubrifier.

Le démarrage du turboréacteur est identifié par la vitesse N2 de l'arbre haute pression du turboréacteur. En effet, lors du démarrage du turboréacteur, la vitesse N2 de l'arbre haute pression du turboréacteur varie entre zéro au début du démarrage et une vitesse caractéristique d'un régime de ralenti, à la fin du démarrage. La vitesse caractéristique d'un régime de ralenti est par exemple égale à 70 % du régime maximal du turboréacteur. La vitesse N2 de l'arbre haute pression est mesurée par le capteur 4.

Le début du démarrage du turboréacteur est identifié par la vitesse N2 de l'arbre haute pression du turboréacteur qui est nulle.

Le résultat de l'étape E1 est la valeur mesurée $EOL_{stop}$ de niveau d'huile dans le réservoir 10 au début du démarrage du turboréacteur.

L'étape suivante E2 est une commande de mesure de la température d'huile réalisée par le capteur 3 de température d'huile.

Le résultat de l'étape E2 est une valeur mesurée $EOT_{start}$ de température lors du démarrage du turboréacteur.

L'étape suivante E3 est une commande de mesure du niveau d'huile $EOL_{ralenti}$ dans le réservoir 10 à la fin du démarrage du turboréacteur. Là aussi, le niveau d'huile dans le réservoir est mesuré par le capteur 5 et est caractéristique de la quantité d'huile présente dans l'ensemble 2 d'organes du turboréacteur à lubrifier.

La fin du démarrage du turboréacteur est identifiée par la vitesse N2 de l'arbre haute pression du turboréacteur, qui est égale à la vitesse de ralenti du turboréacteur.

Le résultat de l'étape E3 est la valeur mesurée $EOL_{ralenti}$ de niveau d'huile dans le réservoir 10 à la fin du démarrage du turboréacteur.

En variante, les instants de mesures au cours du démarrage sont différents et déterminés par d'autres valeurs de vitesse N2 de l'arbre haute pression du turboréacteur.

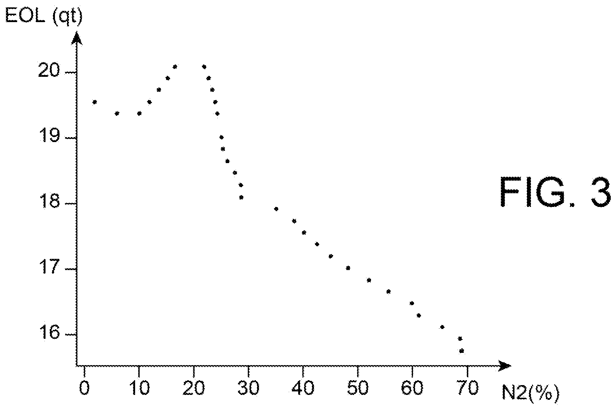

La figure 3 représente l'évolution du niveau d'huile EOL dans le réservoir 10 au cours du démarrage du turboréacteur, c'est-à-dire depuis le début jusqu'à la fin du démarrage, en fonction de la vitesse N2 de l'arbre haute pression du turboréacteur. La figure 3 représente un cas de fonctionnement nominal, lorsque la vanne anti fuite 110 fonctionne normalement.

La vitesse N2 de l'arbre haute pression du turboréacteur varie entre une vitesse nulle et une vitesse de ralenti, et est exprimée en pourcentage du régime maximal du turboréacteur.

En cas de fuite de la vanne anti fuite 110, on rappelle qu'il y a un trop plein d'huile dans l'ensemble 2 d'organes du turboréacteur à lubrifier et par conséquent une répartition anormale de l'huile dans le turboréacteur, au début du démarrage. A la fin du démarrage, le comportement sera stabilisé puisque des pompes de récupération du circuit de récupération d'huile auront récupéré tout ou partie de l'huile initialement stockée dans l'ensemble 2 d'organes du turboréacteur à lubrifier.

L'étape suivante E4 est un calcul d'un indicateur égal à la différence de la valeur mesurée $EOL_{stop}$ de niveau d'huile dans le réservoir au début du démarrage du turboréacteur et de la valeur mesurée $EOL_{ralenti}$ de niveau d'huile dans le réservoir à la fin du démarrage du turboréacteur :

$$EOL_{Mesure} = EOL_{stop} - EOL_{ralenti} \quad (E1)$$

Cet indicateur forme une évolution mesurée du niveau d'huile dans le réservoir. Il a pour fonction de détecter un éventuel comportement anormal de la vanne anti fuite 110 au cours du démarrage, sur la base de la variation du niveau d'huile dans le réservoir entre le début du démarrage (régime moteur nul) et la fin du démarrage (ralenti moteur atteint). Le résultat de l'étape E4 est donc la valeur de l'indicateur $EOL_{Mesure}$.

En parallèle de l'étape E4, ou à la suite de l'étape E4, l'étape E5 est un calcul d'une évolution estimée de niveau d'huile dans le réservoir 10 en fonction de la température d'huile au démarrage du turboréacteur. La température d'huile est mesurée par le capteur 3.

Les inventeurs ont constaté que la dispersion observée sur le niveau d'huile dans le réservoir au démarrage du turboréacteur est majoritairement liée à la température d'huile. Pour améliorer la précision de l'indicateur ci-dessus, la température d'huile est prise en compte pour gagner en précision.

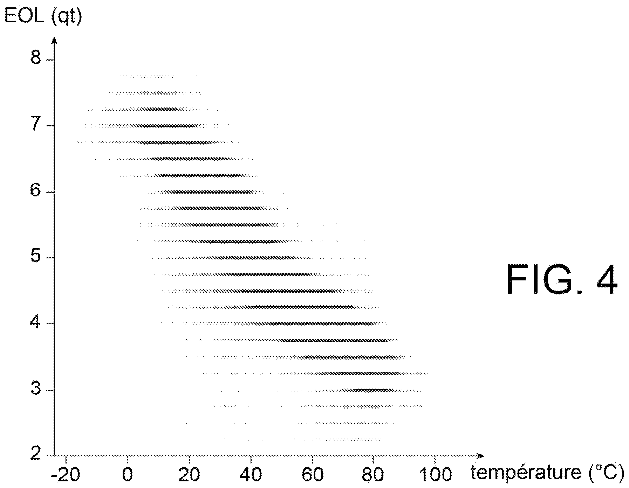

La figure 4 représente le niveau d'huile EOL dans le réservoir 10 lors du démarrage du turboréacteur en fonction de la température d'huile.

Il existe une corrélation significative entre l'amplitude du niveau d'huile dans le réservoir au démarrage du turboréacteur et la température d'huile au démarrage.

Ainsi, il est possible de modéliser les variations de température d'huile au démarrage en créant un modèle du niveau d'huile dans le réservoir au démarrage du turboréacteur sous la forme :

$$EOL_{Modèle} = a \times EOT_{start} + b \quad (E2)$$

Où $EOT_{start}$ représente la température d'huile au démarrage du turboréacteur et a et b sont des constantes.

Le résultat de l'étape E5 est donc la valeur estimée $EOL_{Modèle}$ de niveau d'huile dans le réservoir 10 pour la température d'huile $EOT_{start}$ mesurée au démarrage du turboréacteur.

Les étapes E4 et E5 sont suivies de l'étape E6 à laquelle est calculée la différence $\Delta EOL$ entre la valeur $EOL_{Mesure}$ calculée à l'étape E4 et la valeur $EOL_{modèle}$ calculée à l'étape E5 :

$$\Delta EOL = EOL_{Mesure} - EOL_{Modèle} \quad (E3)$$

La différence $\Delta EOL$ est un indicateur dans lequel l'influence de la température est supprimée.

Le résultat de l'étape E6 est donc la valeur de l'indicateur $\Delta EOL$.

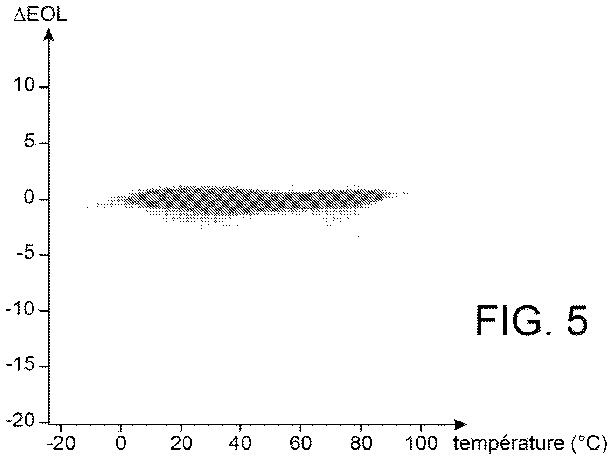

La figure 5 représente la différence $\Delta EOL$ en fonction de la température d'huile sur une série de mesures effectuées avec un turboréacteur donné. En comparant la figure 5 avec

la figure 4, on constate que cet indicateur est centré sur zéro, quelle que soit la température dans une plage de fonctionnement.

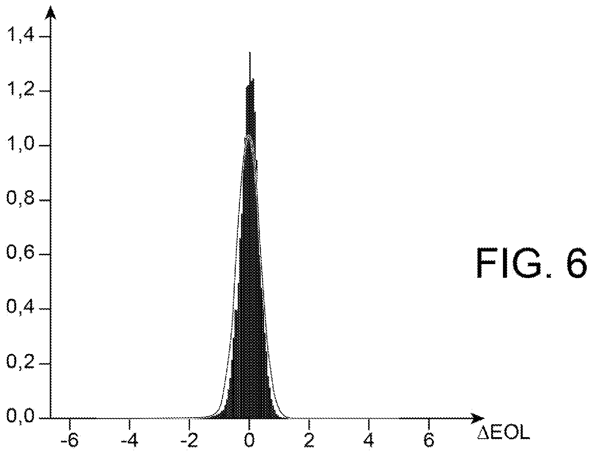

La figure 6 représente la distribution de l'indicateur $\Delta EOL$ sur la série de mesures effectuées avec un turboréacteur donné. Cette distribution peut être approximée par une gaussienne relativement peu dispersée.

L'étape suivante E7 est une détection pour déterminer si le niveau d'huile dans le réservoir est normal ou non, c'est-à-dire si la vanne anti fuite fonctionne normalement ou non.

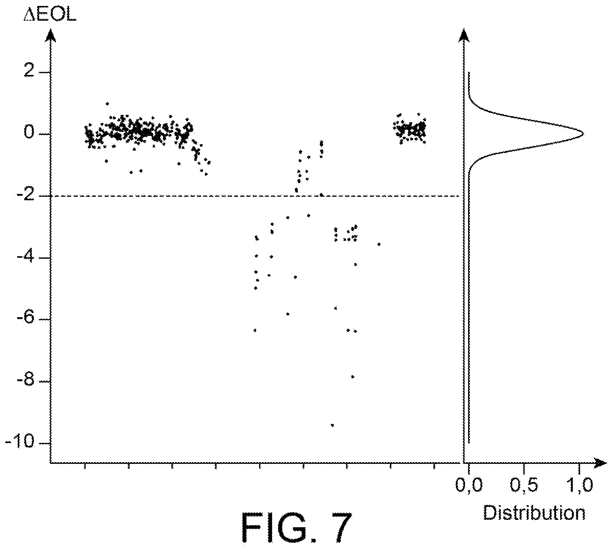

Pour cela, la valeur de l'indicateur $\Delta EOL$ déterminée à l'étape précédente est comparée à un seuil de détection, par exemple égal à -2 comme représenté à la figure 7. Le résultat de la comparaison est mémorisé.

Sur la partie gauche de la figure 7, chaque point au-dessus du seuil de détection est une valeur d'indicateur $\Delta EOL$ correspondant à un démarrage du turboréacteur effectué avec une vanne anti fuite saine, tandis que chaque point au-dessous du seuil de détection est une valeur d'indicateur $\Delta EOL$ correspondant à un démarrage du turboréacteur effectué avec une vanne anti fuite défaillante. La partie droite de la figure représente la distribution des différents points de la partie gauche de la figure.

Si la valeur l'indicateur $\Delta EOL$ est supérieure au seuil de détection, alors le niveau d'huile est normal et l'étape E7 est suivie de l'étape E0 déjà décrite.

Si au contraire la valeur de l'indicateur $\Delta EOL$ est inférieure au seuil de détection, alors le niveau d'huile est anormal et l'étape E7 est suivie de l'étape E8 qui est un test pour déterminer si N, où N est un premier nombre prédéterminé, par exemple égal à trois, de détections de niveau d'huile anormal, parmi les M, où M est un second nombre prédéterminé supérieur à N et par exemple égale à cinq, derniers démarrages du turboréacteur ont été détectés.

Si la réponse est négative, alors l'étape E8 est suivie de l'étape E0 déjà décrite.

Si au contraire la réponse est positive, cela signifie que la détection de niveau d'huile anormal est un phénomène récurrent. L'étape E8 est alors suivie de l'étape E9 à laquelle une alarme est déclenchée. L'alarme est par exemple un message destiné à un opérateur de maintenance du turboréacteur.

## Revendications

1. Procédé de surveillance d'une vanne anti fuite (110) d'un circuit (11) d'alimentation en huile entre un réservoir d'huile (10) et des éléments à lubrifier (2) d'un turboréacteur, **caractérisé en ce qu'**il comporte des étapes de :

   - Commande de mesure (E1, E3) de valeurs ($EOL_{stop}$, $EOL_{ralenti}$) de niveau d'huile dans le réservoir, respectivement au début et à la fin du démarrage du turboréacteur,
   - Calcul (E4) de la différence ($EOL_{Mesure}$) entre les valeurs de niveau d'huile dans le réservoir au début et à la fin du démarrage du turboréacteur, pour former une évolution mesurée du niveau d'huile dans le réservoir,
   - Commande de mesure (E2) d'une valeur ($EOT_{start}$) de température d'huile,
   - Détermination (E5) d'une évolution estimée ($EOL_{Modèle}$) du niveau d'huile dans le réservoir, en fonction de la valeur de température d'huile,
   - Calcul (E6) de la différence ($\Delta EOL$) entre l'évolution mesurée du niveau d'huile dans le réservoir et l'évolution estimée du niveau d'huile dans le réservoir pour la valeur de température mesurée,
   - Comparaison (E7) de la différence calculée avec un seuil de détection,
   - Activation (E9) d'une alarme si la différence calculée est inférieure au seuil de détection.

2. Procédé de surveillance d'une vanne anti fuite selon la revendication 1, dans lequel le début et la fin du démarrage du turboréacteur sont détectés sur la base d'une mesure de vitesse (N2) d'un arbre haute pression du turboréacteur.

3. Procédé de surveillance d'une vanne anti fuite selon la revendication 1 ou 2, dans lequel l'alarme est activée si le résultat de la comparaison est inférieur au seuil de détection pour un premier nombre prédéterminé (N) de démarrage du turboréacteur parmi un second nombre prédéterminé (M) des derniers démarrages du turboréacteur, supérieur au premier nombre prédéterminé.

4. Dispositif de surveillance d'une vanne anti fuite (110) d'un circuit (11) d'alimentation en huile entre un réservoir d'huile (10) et des éléments à lubrifier (2) d'un turboréacteur, **caractérisé en ce qu'**il comporte :

   - Un capteur (5) apte à mesurer des valeurs de niveau d'huile dans le réservoir (10), respectivement au début et à la fin du démarrage du turboréacteur,
   - Un capteur (3) apte à mesurer une valeur de température d'huile,
   - Un calculateur (6) apte à calculer la différence entre les valeurs de niveau d'huile dans le réservoir au début et à la fin du démarrage du turboréacteur, pour former une évolution mesurée du niveau d'huile dans le réservoir, déterminer une évolution estimée du niveau d'huile dans le réservoir en fonction de la valeur de température d'huile, calculer la différence entre l'évolution mesurée du niveau d'huile dans le réservoir et l'évolution estimée du niveau d'huile dans le réservoir pour la valeur de température mesurée, comparer la différence calculée avec un seuil de détection, et activer une alarme si la différence calculée est inférieure au seuil de détection.

5. Turboréacteur équipé d'un dispositif de surveillance d'une vanne anti fuite d'un circuit d'alimentation en huile entre un réservoir d'huile et des éléments à lubrifier du turboréacteur, selon la revendication 4.

6. Aéronef équipé d'un turboréacteur selon la revendication 5.

7. Programme d'ordinateur comportant des instructions pour l'exécution des étapes du procédé selon l'une quelconque des revendications 1 à 3 lorsque ledit programme est exécuté par un ordinateur.

8. Support d'enregistrement lisible par un ordinateur sur lequel est enregistré un programme d'ordinateur comprenant des instructions pour l'exécution des étapes du procédé selon l'une quelconque des revendications 1 à 3.

## Patentansprüche

1. Verfahren zur Überwachung eines Leckageschutzventils (110) eines Ölspeisekreises (11) zwischen einem Öltank (10) und zu schmierenden Elementen (2) eines Turbotriebwerks, **dadurch gekennzeichnet, dass** es die folgenden Schritte umfasst:

- Befehl zum Messen (E1, E3) von Werten (EOL$_{Stopp}$, EOL$_{Leerlauf}$) des Ölstands im Tank jeweils zu Beginn und am Ende des Starts des Turbotriebwerks,
- Berechnen (E4) der Differenz (EOL$_{Messung}$) zwischen den Ölstandswerten im Tank zu Beginn und am Ende des Starts des Turbotriebwerks, um eine gemessene Entwicklung des Ölstands im Tank zu bilden,
- Befehl zum Messen (E2) eines Wertes (EOT$_{Start}$) der Öltemperatur,
- Bestimmen (E5) einer geschätzten Entwicklung (EOL$_{Modell}$) des Ölstands im Tank in Abhängigkeit vom Öltemperaturwert,
- Berechnen (E6) der Differenz ($\Delta$EOL) zwischen der gemessenen Entwicklung des Ölstands im Tank und der geschätzten Entwicklung des Ölstands im Tank für den gemessenen Temperaturwert,
- Vergleichen (E7) der berechneten Differenz mit einer Detektionsschwelle,
- Aktivieren (E9) eines Alarms, wenn die berechnete Differenz kleiner ist als die Detektionsschwelle.

2. Verfahren zur Überwachung eines Leckageschutzventils nach Anspruch 1, wobei der Beginn und das Ende des Starts des Turbotriebwerks auf Basis einer Drehzahlmessung (N2) einer Hochdruckwelle des Turbotriebwerks detektiert werden.

3. Verfahren zur Überwachung eines Leckageschutzventils nach Anspruch 1 oder 2, wobei der Alarm aktiviert wird, wenn das Ergebnis des Vergleichs bei einer ersten vorbestimmten Anzahl (N) von Starts des Turbotriebwerks aus einer zweiten vorbestimmten Anzahl (M) der letzten Starts des Turbotriebwerks, die größer ist als die erste vorbestimmte Anzahl, kleiner ist als die Detektionsschwelle.

4. Vorrichtung zur Überwachung eines Leckageschutzventils (110) eines Ölspeisekreises (11) zwischen einem Öltank (10) und zu schmierenden Elementen (2) eines Turbotriebwerks, **dadurch gekennzeichnet, dass** sie umfasst:

- einen Sensor (5), der in der Lage ist, Ölstandswerte im Tank (10) jeweils zu Beginn und am Ende des Starts des Turbotriebwerks zu messen,
- einen Sensor (3), der in der Lage ist, einen Öltemperaturwert zu messen,
- einen Rechner (6), der in der Lage ist, die Differenz zwischen den Ölstandswerten im Tank zu Beginn und am Ende des Starts des Turbotriebwerks zu berechnen, um eine gemessene Entwicklung des Ölstands im Tank zu bilden, eine geschätzte Entwicklung des Ölstands im Tank in Abhängigkeit vom Öltemperaturwert zu bestimmen, die Differenz zwischen der gemessenen Entwicklung des Ölstands im Tank und der geschätzten Entwicklung des Ölstands im Tank für den gemessenen Temperaturwert zu berechnen, die berechnete Differenz mit einer Detektionsschwelle zu vergleichen, und einen Alarm zu aktivieren, wenn die berechnete Differenz kleiner ist als die Detektionsschwelle.

5. Turbotriebwerk, das mit einer Vorrichtung zur Überwachung eines Leckageschutzventils eines Ölspeisekreises zwischen einem Öltank und zu schmierenden Elementen des Turbotriebwerks nach Anspruch 4 ausgerüstet ist.

6. Luftfahrzeug, das mit einem Turbotriebwerk nach Anspruch 5 ausgerüstet ist.

7. Computerprogramm, das Anweisungen umfasst zur Ausführung der Schritte des Verfahrens nach einem der Ansprüche 1 bis 3, wenn das Programm von einem Computer ausgeführt wird.

8. Von einem Computer lesbarer Speicherträger, auf dem ein Computerprogramm gespeichert ist, das Anweisungen zur Ausführung der Schritte des Verfahrens nach einem der Ansprüche 1 bis 3 umfasst.

**Claims**

1. Method for monitoring an anti-leak valve (110) of a circuit (11) for supplying oil between an oil reservoir (10) and elements (2) to be lubricated of a jet engine, **characterised in that** it comprises steps of:

- Controlling the measurement (E1, E3) of oil level values (EOL$_{stop}$, EOL$_{idle}$) in the reservoir, respectively at the start and at the end of the jet engine start-up,
- Calculating (E4) the difference (EOL$_{Measurement}$) between the oil level values in the reservoir at the start and at the end of the jet engine start-up, to form a measured change in the oil level in the reservoir,
- Controlling the measurement (E2) of an oil temperature value (EOT$_{start}$),
- Determining (E5) an estimated change (EOL$_{Model}$) of the oil level in the reservoir, depending on the oil temperature value,
- Calculating (E6) the difference ($\Delta$EOL) between the measured change in the oil level in the reservoir and the estimated change in the oil level in the reservoir for the measured temperature value,
- Comparing (E7) the calculated difference with a detection threshold,

- Activating (E9) an alarm if the calculated difference is lower than the detection threshold.

2. Method for monitoring an anti-leak valve according to claim 1, wherein the start and the end of the jet engine start-up are detected on the basis of a speed measurement (N2) of a high pressure shaft of the jet engine.

3. Method for monitoring an anti-leak valve according to claim 1 or 2, wherein the alarm is activated if the result of the comparison is lower than the detection threshold for a first predetermined number (N) of jet engine start-ups from a second predetermined number (M) of recent jet engine start-ups, higher than the first predetermined number.

4. Device for monitoring an anti-leak valve (110) of a circuit (11) for supplying oil between an oil reservoir (10) and elements (2) to be lubricated of a jet engine, **characterised in that** it comprises:

   - A sensor (5) capable of measuring oil level values in the reservoir (10), respectively at the start and at the end of the jet engine start-up,
   - A sensor (3) capable of measuring an oil temperature value,
   - A calculator (6) capable of calculating the difference between the oil level values in the reservoir at the start and at the end of the jet engine start-up, to form a measured change in the oil level in the reservoir, determining an estimated change of the oil level in the reservoir depending on the oil temperature value, calculating the difference between the measured change in the oil level in the reservoir and the estimated change of the oil level in the reservoir for the measured temperature value, comparing the difference calculated with a detection threshold, and activating an alarm if the calculated difference is lower than the detection threshold.

5. Jet engine equipped with a device for monitoring an anti-leak valve of a circuit for supplying oil between an oil reservoir and elements to be lubricated of the jet engine, according to claim 4.

6. Aircraft equipped with a jet engine according to claim 5.

7. Computer program comprising instructions for executing steps of a method according to any one of claims 1 to 3 when said program is executed by a computer.

8. Recording medium that can be read by a computer on which is saved a computer program comprising instructions for executing steps of the method according to any one of claims 1 to 3.

FIG. 1

FIG. 2

FIG. 3

FIG. 4

FIG. 5

FIG. 6

FIG. 7

## RÉFÉRENCES CITÉES DANS LA DESCRIPTION

**Documents brevets cités dans la description**

- FR 2958911 A1